# EUROPÄISCHE PATENTANMELDUNG

(11) **EP 4 238 837 A2**
(43) Veröffentlichungstag der Anmeldung: **06.09.2023**
(21) Anmeldenummer: 23159810.3
(22) Anmeldetag: 03.03.2023
(51) Int. Cl.: B60S 1/38

(54) **WISCHERVORRICHTUNG MIT ZUMINDEST EINER ENDKAPPENEINHEIT UND VERFAHREN ZUR MONTAGE EINER WISCHERVORRICHTUNG**

(30) Priorität: 03.03.2022 DE 102022202185
(71) Anmelder: Robert Bosch GmbH, 70442 Stuttgart (DE)
(72) Erfinder: Bubba, Marcello, 3210 Linden (BE); Kadas, Bence, 1103 Budapest (HU); Kuypers, Peter, 3700 Tongeren (BE); Bencsik, Barnabas, 2473 Val (HU)

(57) **Zusammenfassung**

Die Erfindung geht aus von einer Wischervorrichtung (10a; 10b; 10c) mit zumindest einer Endkappeneinheit (12a; 12b; 12c), welche zumindest ein Endkappenelement (14a; 14b; 14c) umfasst, das zu einer Aufnahme von zumindest einem Endbereich (60a; 60b; 60c) von zumindest einer Federschiene (16a; 16b; 16c) einer Wischleiste (20a; 20b; 20c) und von zumindest einem Wischblatt (18a; 18b; 18c) der Wischleiste (20a; 20b; 20c) eingerichtet ist und das zumindest ein Wischblattfixierelement (22a; 22b; 22c) zur Fixierung des Wischblatts (18a; 18b; 18c) aufweist.

Es wird vorgeschlagen, dass das Wischblattfixierelement (22a; 22b; 22c), insbesondere zu einer formschlüssigen Montage des Wischblatts (18a; 18b; 18c), aus einer Ruhelage des Wischblattfixierelements (22a; 22b; 22c) in dem Endkappenelement (14a; 14b; 14c) heraus bewegbar ausgeführt ist.

## Beschreibung

### Stand der Technik

Es ist bereits eine Wischervorrichtung mit zumindest einer Endkappeneinheit, welche zumindest ein Endkappenelement umfasst, das zu einer Aufnahme von zumindest einem Endbereich von zumindest einer Federschiene einer Wischleiste und von zumindest einem Wischblatt der Wischleiste eingerichtet ist und das zumindest ein Wischblattfixierelement zur Fixierung des Wischblatts aufweist, vorgeschlagen worden.

### Offenbarung der Erfindung

Die Erfindung geht aus von einer Wischervorrichtung mit zumindest einer Endkappeneinheit, welche zumindest ein Endkappenelement umfasst, das zu einer Aufnahme von zumindest einem Endbereich von zumindest einer Federschiene einer Wischleiste und von zumindest einem Wischblatt der Wischleiste eingerichtet ist und das zumindest ein Wischblattfixierelement zur Fixierung des Wischblatts aufweist.

Es wird vorgeschlagen, dass das Wischblattfixierelement, insbesondere zu einer formschlüssigen Montage des Wischblatts, aus einer Ruhelage des Wischblattfixierelements in dem Endkappenelement heraus bewegbar ausgeführt ist. Durch das erfindungsgemäße Verfahren kann vorteilhaft eine einfache, schnelle und damit kostengünstige Montage erfolgen. Vorteilhaft kann eine Montagekomplexität reduziert werden. Unter einer "Wischervorrichtung" soll vorzugsweise zumindest ein Teil, bevorzugt eine Unterbaugruppe, eines Wischblatts, insbesondere eines Scheibenwischers, verstanden werden. Vorzugsweise kann die Wischervorrichtung auch die gesamte Wischleiste, insbesondere den gesamten Scheibenwischer, umfassen. Vorzugsweise ist die Wischervorrichtung zu einem Einsatz an einem Fahrzeug vorgesehen. Vorzugsweise ist die Wischervorrichtung, insbesondere als Teil des Wischblatts, insbesondere des Scheibenwischers, zu einer Reinigung einer Fläche, bevorzugt einer Scheibe an dem Fahrzeug, vorgesehen. Unter "vorgesehen" oder "eingerichtet" soll vorzugsweise speziell eingerichtet, speziell ausgelegt und/oder speziell ausgestattet verstanden werden. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt.

Vorzugsweise weist die Wischleiste zumindest eine Federschiene, bevorzugt zumindest zwei Federschienen und/oder zumindest ein Wischblatt auf. Insbesondere ist die Wischleiste dazu vorgesehen, eine Scheibe, insbesondere eine Fahrzeugscheibe, zumindest mechanisch zu reinigen. Insbesondere ist die zumindest eine Federschiene dazu vorgesehen, das Wischblatt zu fixieren. Vorzugsweise ist das Wischblatt zwischen den Federschienen fixiert, insbesondere geklemmt. Es ist denkbar, dass das Wischblatt form- und/oder stoffschlüssig zwischen den Federschienen fixiert ist. Insbesondere sind die Federschienen dazu vorgesehen, das Wischblatt zu fixieren. Insbesondere sind die Federschienen dazu vorgesehen, die Wischervorrichtung zu versteifen und/oder eine Form und/oder eine Position des Wischblatts zu definieren und aufrechtzuerhalten. Unter "formschlüssig" soll insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Vorzugsweise bestehen die Federschienen aus einem metallischen Werkstoff, insbesondere Stahl, Aluminium oder einem vergleichbaren Werkstoff. Insbesondere weist die Federschiene zumindest einen Endbereich auf, welcher an einem Ende der Federschiene angeordnet ist. Die Enden der Federschiene sind als die zwei, in Haupterstreckungsrichtung der Federschiene gesehen, am weitesten voneinander entferntesten Punkten der Federschiene definiert. Insbesondere erstreckt sich der zumindest eine Endbereich der Federschiene über eine Länge zwischen 1 cm und 5 cm. Insbesondere erstreckt sich der zumindest eine Endbereich der Federschien über eine Länge zumindest 10 %, bevorzugt zumindest 5 % und besonders bevorzugt zumindest 2 % der Länge der Federschiene. Der zumindest eine Endbereich ist dazu vorgesehen, eine Verbindung mit dem Endkappenelement einzugehen.

Vorzugsweise weist die Wischervorrichtung eine Endkappeneinheit mit zumindest einem Endkappenelement auf, welches dazu vorgesehen ist, die Position von dem Wischblatt und der Federschiene und/oder den Federschienen zueinander zu fixieren. Insbesondere ist das zumindest eine Endkappenelement aus einem elastischen Kunststoffwerkstoff, insbesondere als einstückiges, vorzugsweise monolithisches, Kunststoffspritzgussteil, gefertigt. Vorzugsweise ist das Endkappenelement auch dazu vorgesehen, die Federschienen und/oder das Wischblatt, insbesondere formschlüssig, zu fixieren. Die Federschienen weisen insbesondere zumindest an einem der beiden Enden vorzugsweise ein Formschlusselement auf, welches als eine Ausnehmung und/oder als eine Erhebung ausgebildet sein kann. Vorzugsweise ist das Wischblattfixierelement dazu vorgesehen, einen Formschluss mit dem Wischblatt auszubilden. Vorzugsweise weist die Endkappeneinheit ein weiteres Endkappenelement auf, welches ohne Wischblattfixierelement ausgebildet ist. Vorzugsweise werden beide Enden von einer Wischleiste mit je einem Endkappenelement fixiert, wobei maximal eines der beiden Endkappenelemente ein Wischblattfixierelement aufweist. Vorzugsweise kann das Endkappenelement, welches ohne Wischblattfixierelement ausgebildet ist, betriebsbedingte Längenänderungen des Wischblatts infolge Temperatur und/oder Druckänderungen und/oder Vibrationen und/oder Kräften, welche im Betrieb auf das Wischblatt und/oder die Wischervorrichtung wirken, aufnehmen. Vorzugsweise können Vibrationen der Wischervorrichtung und/oder ein Verbiegen und/oder Abheben des Wischblatts durch eine Fest-/Loslagerung des Wischblatts verhindert werden. Insbesondere kann durch die Fest-/Loslagerung in allen Betriebszuständen und bei allen Betriebsbedingungen ein exaktes/ideales Anliegen des Wischblatts auf die zu reinigende Oberfläche realisiert werden.

Vorzugsweise ist das Wischblattfixierelement aus einem elastischen Werkstoff, insbesondere einem Kunststoff oder einem kunststoffähnlichen Werkstoff, vorzugsweise mit elastischen Materialeigenschaften, ausgebildet. Insbesondere ist das Wischblattfixierelement als Spritzgussteil, insbesondere einstückig oder monolithisch, mit dem Endkappenelement ausgebildet. Vorzugsweise ist das Wischblattfixierelement bewegbar, insbesondere elastisch bewegbar, ausgeführt, wobei das Wischblattfixierelement bei einer Montage, insbesondere durch Biegen und/oder Drehen und/oder Tordieren und/oder Stauchen, bewegbar ausgeführt sein kann, wobei auch weitere elastische Verformungen zu einer Montage denkbar sind. Es ist denkbar, dass die Bewegung des Wischblattfixierelements als elastische Verformbarkeit ausgebildet ist. Vorzugsweise ist das Wischblattfixierelement bewegbar ausgeführt, um bei einer Montage eine formschlüssige Verbindung zu dem Wischblatt herstellen zu können. Vorteilhaft kann die Montage durch die bewegbare Ausführung des Wischblattfixierelements in einem Schritt erfolgen. Vorzugsweise befindet sich das Wischblattfixierelement in einem montierten und in einem demontierten Zustand in einer Ruhelage, insbesondere in einem Zustand, welcher sich im Wesentlichen in einem Kräftegleichgewicht befindet und/oder kräftefrei ausgebildet ist. Vorzugsweise wirken während dem Montagevorgang Kräfte auf das Wischblattfixierelement, welche zu einer Auslenkung aus dem Ruhezustand führen und einen kurzfristigen vorübergehenden Zustand darstellen. Vorübergehend ist dabei als zeitlich begrenzt zu betrachten, wobei der Zeitanteil des kurzfristigen Zustands vernachlässigbar gering, insbesondere vernachlässigbar gering im Vergleich zum Zeitanteil im Ruhezustand ist.

Des Weiteren wird vorgeschlagen, dass das Endkappenelement zumindest ein Trägerelement aufweist, welches zumindest das Wischblattfixierelement trägt, wobei zumindest das Trägerelement, insbesondere zu der formschlüssigen Montage des Wischblatts, elastisch auslenkbar ist. Vorteilhaft kann die Montage des Endkappenelements in einem Schritt erfolgen. Vorteilhaft kann die Zeitdauer der Montage verkürzt werden. Vorteilhaft kann eine Montagekraft reduziert werden. Vorzugsweise ist das Trägerelement aus einem elastischen Werkstoff, insbesondere einem Kunststoff oder einem kunststoffähnlichen Werkstoff, vorzugsweise mit elastischen Materialeigenschaften, ausgebildet. Insbesondere ist das Trägerelement als Spritzgussteil, insbesondere einstückig oder monolithisch, mit dem Endkappenelement ausgebildet. Vorzugsweise ist das Trägerelement bewegbar, insbesondere elastisch bewegbar, ausgeführt, wobei bewegbar insbesondere drehbar und/oder biegbar und/oder tordierbar und/oder stauchbar ausgeführt sein kann. Es ist denkbar, dass die Bewegung als elastische Verformbarkeit ausgebildet ist oder dass sich die Bewegung aus mehreren verschiedenen Bewegungen und/oder Bewegungsrichtungen zusammensetzt. Vorzugsweise weist das Endkappenelement zumindest zwei Wischblattfixierelemente auf. Vorzugsweise weist das Endkappenelement zumindest zwei Trägerelemente auf. Vorzugsweise ist an jedem Trägerelement ein Wischblattfixierelement angeordnet. Insbesondere kann das Wischblattfixierelement einstückig mit dem Trägerelement ausgebildet sein. Insbesondere kann das Trägerelement einstückig mit dem Endkappenelement ausgebildet sein.

Ferner wird vorgeschlagen, dass das Trägerelement um eine Achse auslenkbar ist, welche zumindest im Wesentlichen parallel zu einer Haupterstreckungsebene des Endkappenelements ist/verläuft. Vorteilhaft kann die Montagekraft reduziert werden. Besonders vorteilhaft kann ein vorhandener Bauraum genutzt werden. Vorteilhaft kann die Montagekomplexität reduziert werden. Vorteilhaft kann eine flache und/oder aerodynamische Bauweise erreicht werden. Vorzugsweise ist die Auslenkung des Trägerelements um eine Achse als eine Biegung und/oder als eine Torsion ausgebildet. Es ist denkbar, dass sich die Auslenkungsbewegung aus mehreren verschiedenen Bewegungen und/oder Bewegungsrichtungen, welche sich zumindest im Wesentlichen parallel zur Haupterstreckungsebene des Endkappenelements erstrecken, zusammensetzt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

In einem weiteren Aspekt der Erfindung, welcher für sich alleine genommen, oder auch in Kombination mit zumindest einem, insbesondere in Kombination mit einem, insbesondere in Kombination mit beliebig vielen der übrigen Aspekte der Erfindung betrachtet werden kann, wird vorgeschlagen, dass das Endkappenelement zumindest einen Federschienenaufnahmebereich ausbildet und dass das Endkappenelement zumindest ein Einfuhrschrägeelement aufweist, welches in einem montierten Zustand der Wischervorrichtung an einem scheibenabgewandten Rand des Federschienenaufnahmebereichs angeordnet ist. Vorteilhaft kann die Wischleiste, insbesondere die Federschiene/Federschienen und das Wischblatt, besonders einfach montiert werden. Besonders vorteilhaft können zwei Montageschritte kombiniert und so die Montagekomplexität reduziert werden. Vorzugsweise weist das Einfuhrschrägeelement einen flachen Winkel zu einer Montagerichtung auf, wobei der Winkel insbesondere derart angeordnet ist, dass sich das Einfuhrschrägeelement in Montagerichtung gesehen in den Federschienenaufnahmebereich erstreckt. Unter einem "flachen Winkel" soll insbesondere ein Winkel verstanden werden, welcher kleiner als 45°, bevorzugt kleiner als 35°, vorzugsweise kleiner als 25° und besonders bevorzugt kleiner als 15° ist. Es ist auch denkbar, dass der Winkel derart angeordnet ist, dass sich das Einfuhrschrägeelement in Montagerichtung in das Trägerelement erstreckt. Vorzugsweise ist der Federschienenaufnahmebereich dazu vorgesehen, die Federschiene nach der Montage in dem Federschienenaufnahmebereich aufzunehmen. Vorzugsweise erstreckt sich das Einfuhrschrägeelement in montiertem und in demontiertem Zustand zu einem Großteil in den Federschienenaufnahmebereich. Insbesondere kontaktiert das Einfuhrschrägeelement in einem montierten Zustand die Federschiene zumindest teilweise. Insbesondere ist das Einfuhrschrägeelement dazu vorgesehen, die, insbesondere besonders einfache, Montage zu ermöglichen. Insbesondere ist das Einfuhrschrägeelement dazu voresehen, das Trägerelement und/oder das Wischblattfixierelement bei der Montage der Wischleiste auszulenken. Insbesondere wird das Einfuhrschrägeelement bei der Montage durch die Federleiste, insbesondere in die Richtung des Trägerelements und/oder des scheibenabgewandten Bereichs der Federleiste, ausgelenkt. Unter der Wendung "scheibenabgewandt" soll dabei insbesondere verstanden werden, dass sich die zu reinigende Scheibe, insbesondere Windschuztzscheibe des Fahrzeugs, auf der entgegengesetzten Seite des Bauteils befindet, auf welches Bezug genommen wird. Insbesondere wird bei der Montage durch die Federschiene eine Kraft auf das Einfuhrschrägeelement ausgeübt, welche das Einfuhrschrägeelement auslenkt. Insbesondere ist die Haupterstreckungsebene des Federschienenaufnahmebereichs parallel zu der Haupterstreckungsrichtung des Endkappenelements angeordnet.

Ferner wird vorgeschlagen, dass das Trägerelement das Einfuhrschrägeelement trägt. Vorteilhaft erfolgt die Bewegung des Wischblattfixierelements automatisch bei der Montage, weshalb eine Montage vorteilhaft vereinfacht wird. Vorteilhaft wird die Montagekomplexität und/oder die Montagekraft reduziert. Vorzugsweise sind das Trägerelement und das Einfuhrschrägeelement einstückig und/oder einteilig ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Bevorzugt soll unter einstückig einteilig verstanden werden. Unter "einteilig" soll insbesondere in einem Stück geformt / monolithisch verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere ist das Einfuhrschrägeelement dazu vorgesehen, das Trägerelement auszulenken und/oder eine Montage des Endkappenelements zu ermöglichen.

Des Weiteren wird vorgeschlagen, dass das Endkappenelement einen Wischblattaufnahmebereich ausbildet und dass das Einfuhrschrägeelement in einer Haupterstreckungsebene des Endkappenelements gesehen zumindest teilweise (seitlich) neben dem Wischblattaufnahmebereich angeordnet ist. Vorteilhaft kann die Montage vereinfacht werden. Vorteilhaft kann eine kleinbauende / kompakte Bauweise ermöglicht werden. Vorzugsweise ist der Wischblattaufnahmebereich dazu vorgesehen, das Wischblatt nach der Montage in dem Wischblattaufnahmebereich anzuordnen. Vorzugsweise grenzt das Einfuhrschrägeelement unmittelbar an den Wischblattaufnahmebereich an. Es ist denkbar, dass das Einfuhrschrägeelement in montiertem Zustand das Wischblatt kontaktiert.

Ferner wird vorgeschlagen, dass das Endkappenelement ein Formschlusselement aufweist, welches dazu vorgesehen ist, einen Formschluss mit der Federschiene einzugehen. Vorteilhaft kann eine verbesserte Festigkeit der Verbindung zwischen Wischleiste und Endkappe hergestellt werden. Vorteilhaft kann eine einfache Montage bereitgestellt werden. Vorteilhaft kann eine Sicherheit gegen ungewollte Demontage und/oder Trennen der Bauteile im Betrieb erhöht werden. Die formschlüssige Verbindung kann zerstörungsfrei trennbar oder zerstörungsfrei untrennbar, insbesondere demontierbar oder nicht demontierbar, ausgeführt sein. Vorzugsweise ist das Formschlusselement als Rastnase und/oder als Rastausnehmung ausgebildet. Insbesondere weist die Federschiene ein korrespondierendes Formschlusselement, insbesondere ein Rastelement, auf, welches dazu vorgesehen ist, mit dem Formschlusselement, insbesondere Rastelement, des Endkappenelements zu verrasten, insbesondere eine formschlüssige Verbindung zu bilden. Insbesondere befindet sich das Formschluselement des Endkappenelements in verrasteten Zustand in einem Eingriff mit der Federschiene. Insbesondere ist die Federschiene in dem Federschienenaufnahmebereich angeordnet, wenn der Formschluss zwischen dem Formschlusselement der Federschiene und dem korrespondierenden Formschlusselement des Endkappenelements besteht.

Des Weiteren wird vorgeschlagen, dass das Trägerelement das Formschlusselement trägt, wobei zumindest das Trägerelement, insbesondere zu der formschlüssigen Montage der Federschiene, elastisch auslenkbar ist. Vorteilhaft kann die Montagekraft reduziert werden. Vorzugsweise ist das Trägerelement und das Formschlusselement einstückig oder einteilig ausgebildet. Insbesondere ist das Formschlusselement getrennt und verschieden von dem Wischblattfixierelement ausgebildet. Insbesondere ist durch eine Bewegung des Trägerelements zumindest ein Formschlusselement zur Montage der Federschiene und zumindest ein Wischblattfixierelement zur Montage des Wischblatts gleichzeitig auslenkbar.

Ferner wird vorgeschlagen, dass das Einfuhrschrägeelement das Formschlusselement ausbildet. Vorteilhaft kann eine Bauteilkomplexität reduziert werden. Insbesondere sind das Einfuhrschrägeelement und das Formschlusselement als ein Bauteil ausgebildet. Es ist auch denkbar, dass das Einfuhrschrägeelement und das Formschlusselement als zwei verschiedene, insbesondere nebeneinander und/oder hintereinander angeordnete Elemente, ausgebildet sind. Insbesondere soll das Bauteil die Funktion des Einfuhrschrägeelements und des Formschlusselements vereinen.

Des Weiteren wird vorgeschlagen, dass das Endkappenelement zumindest ein weiteres Wischblattfixierelement umfasst, welches an dem Trägerelement oder an einem von dem Trägerelement verschiedenen, insbesondere getrennt von dem Trägerelement ausgebildeten, weiteren Trägerelement des Endkappenelements angeordnet ist. Vorteilhaft kann die Haltbarkeit der Verbindung von Wischleiste und Endkappenelement weiter verbessert werden. Vorzugsweise weist das Endkappenelement zwei Trägerelemente auf, welche an einer durch das Wischblatt gebildeten Achse gespiegelt angeordnet und gemeinsam oder getrennt beweglich angeordnet sind. Vorzugsweise sind das Wischblattfixierelement und das weitere Wischblattfixierelement zueinander identisch ausgebildet. Vorzugsweise sind das Trägerelement und das weitere Trägerelement zueinander identisch ausgebildet. Vorzugsweise sind die beiden Trägerelemente und/oder die beiden Wischblattfixierelemente unabhängig und/oder getrennt voneinander auslenkbar ausgebildet.

Es ist denkbar, dass das Endkappenelement ein Trägerelement aufweist, welches zwei Wischblattfixierelemente und zwei Formschlusselemente aufweist. Es ist denkbar, dass das eine Trägerelement senkrecht zu der Montagerichtung auslenkbar angeordnet ist. Es ist weiterhin denkbar, dass das Endkappenelement zwei Trägerelemente, insbesondere mit je einem Wischblattfixierelement und einem Formschlusselement, aufweist. Es ist denkbar, dass die zwei Trägerelemente miteinander verbunden und senkrecht zu der Montagerichtung auslenbar angeordnet sind.

Ferner wird ein Wischer mit einer Wischervorrichtung nach einem der vorhergehenden Ansprüche und mit der Wischleiste vorgeschlagen. Durch den insbesondere besonders zuverlässigen Betrieb des Wischers und/oder der Wischervorrichtung kann ferner eine besonders vorteilhafte Sicherheit des die Wischervorrichtung aufweisenden Fahrzeugs gewährleistet werden. Vorzugsweise ist der Wischer dazu vorgesehen, eine Oberfläche, insbesondere eine Scheibe, welche an einem Fahrzeug angebracht ist, zu reinigen. Durch eine derartige Ausgestaltung der Wischervorrichtung kann insbesondere eine besonders zuverlässige Reinigung und dadurch insbesondere ein besonders zuverlässiger Betrieb des Wischers gewährleistet werden.

Des Weiteren wird ein Verfahren zur Montage der Wischervorrichtung vorgeschlagen, wobei das Wischblattfixierelement in zumindest einem Montageschritt aus einer Ruhelage des Wischblattfixierelements in dem Endkappenelement heraus bewegt wird. Vorteilhaft kann die Montagekraft reduziert werden. Besonders vorteilhaft kann die Montage in einem Montageschritt durchgeführt werden. Vorteilhaft kann die Montagekomplexität reduziert werden. Besonders vorteilhaft können Montagekosten reduziert werden. Vorzugsweise erfolgt die Montage in dem Montageverfahren, welches ein Einschieben der Wischleiste in das Endkappenelement umfasst. Vorzugsweise wird in dem Montageschritt des Montageverfahrens das Trägerelement durch ein Einschieben der Wischleiste in das Endkappenelement von dem Einfuhrschrägeelement ausgelenkt. Insbesondere durch die Anordnung des zumindest einen Wischblattfixierelements und des zumindest einen Formschlusselements an demselben Trägerelement wird durch die Auslenkung des Trägerelements auch das Wischblattfixierelement ausgelenkt. Vorzugsweise wird in dem Montageschritt eine Formschlussverbindung zwischen dem zumindest einen Wischblattfixierelement und dem Wischblatt und zwischen dem Formschlusselement des Endkappenelements und dem korresponierenden Formschlusselement des Wischblatts, welches an der Federschiene angeordnet ist, hergestellt. Vorzugsweise wird die formschlüssige Verbindung hergestellt, indem das zumindest eine ausgelenkte Wischblattfixierelement und das zumindest eine Formschlusselement in den ursprünglichen unbelasteten Zustand zurückgeführt werden.

Die erfindungsgemäße Wischervorrichtung mit zumindest einer Endkappeneinheit soll hierbei nicht auf die oben beschriebene Anwendung und Ausführungsform beschränkt sein. Insbesondere kann die erfindungsgemäße Wischervorrichtung mit zumindest einer Endkappeneinheit zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Explosionsdarstellung eines Wischers mit einer Wischervorrichtung,
- Fig. 2: eine schematische perspektivische Darstellung eines Endkappenelements der Wischervorrichtung,
- Fig. 3: eine schematische Draufsicht auf den Wischer im Bereich des Endkappenelements,
- Fig. 4: ein schematisches Ablaufdiagramm eines Verfahrens zur Montage der Wischervorrichtung,
- Fig. 5: eine schematische perspektivische Darstellung eines alternativen Endkappenelements einer alternativen Wischervorrichtung und
- Fig. 6: eine schematische perspektivische Darstellung eines weiteren alternativen Endkappenelements einer weiteren alternativen Wischervorrichtung.

### Beschreibung der Ausführungsbeispiele

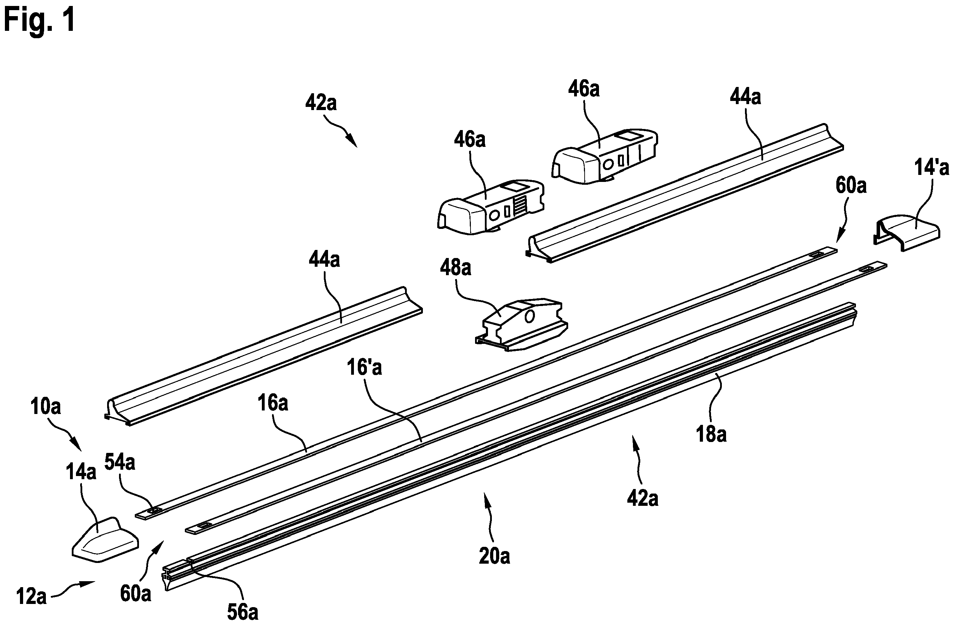

Die Figur 1 zeigt eine schematische Explosionsdarstellung eines Wischers 42a. Der Wischer 42a weist einen Spoiler 44a auf. Der Spoiler 44a wirkt als aerodynamisches Element und stellt einen Anpressdruck des Wischers 42a gegen eine Fahrzeugscheibe 58a (in Fig. 1 nicht dargestellt) bereit. Der Wischer 42a weist zwei Befestigungselemente 46a auf. Die Befestigungselemente 46a sind dazu vorgesehen, den Wischer 42a an einem Wischarm (nicht dargestellt) zu fixieren. Der Wischer 42a weist einen Adapter 48a auf. Der Adapter 48a ist dazu vorgesehen, den Spoiler 44a an dem Wischer 42a zu fixieren. Der Adapter 48a ist dazu vorgesehen, den Wischer 42a an dem Wischarm (nicht dargestellt) zu fixieren.

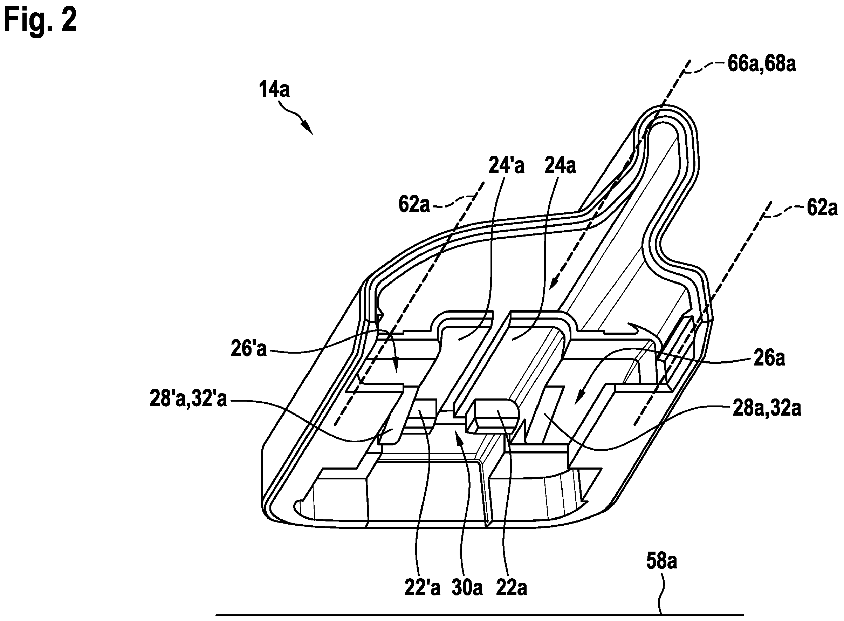

Der Wischer 42a weist eine Wischervorrichtung 10a auf. Die Wischervorrichtung 10a weist eine Wischleiste 20a auf. Die Wischleiste 20a weist ein Wischblatt 18a auf. Die Wischervorrichtung 10a weist zwei Federschienen 16a, 16'a auf. Das Wischblatt 18a ist dazu vorgesehen, eine Fahrzeugscheibe 58a zu reinigen. Die Federschienen 16a, 16'a sind dazu vorgesehen, das Wischblatt 18a zu fixieren. Die Federschienen 16a, 16'a klemmen das Wischblatt 18a zusammen. Die Wischervorrichtung 10a weist eine Endkappeneinheit 12a auf. Die Endkappeneinheit 12a weist ein Endkappenelement 14a auf. Die Endkappeneinheit 12a weist ein weiteres Endkappenelement 14'a auf. Die Endkappenelemente 14a, 14'a sind dazu vorgesehen, die Wischleiste 20a in einer montierten, insbesondere geklemmten, Position zu fixieren. Das Endkappenelement 14a ist aus einem elastischen Kunststoff gefertigt. Das Endkappenelement 14a ist als ein Spritzgussteil gebildet. Das Endkappenelement 14a weist ein Formschlusselement 32a auf (vgl. Fig. 2). Die Federschienen 16a, 16'a sind aus einem metallischen Werkstoff gefertigt. Die Federschienen 16a, 16'a weisen je zwei Endbereiche 60a auf. Die Endbereiche 60a weisen je ein korrespondierendes Formschlusselement 54a auf. Das korrespondierende Formschlusselement 54a ist als eine die Federschiene 16a durchdringende Formschlussausnehmung ausgebildet. Das korrespondierende Formschlusselement 54a ist dazu vorgesehen, einen Formschluss mit dem Formschlusselement 32a des Endkappenelements 14a einzugehen.

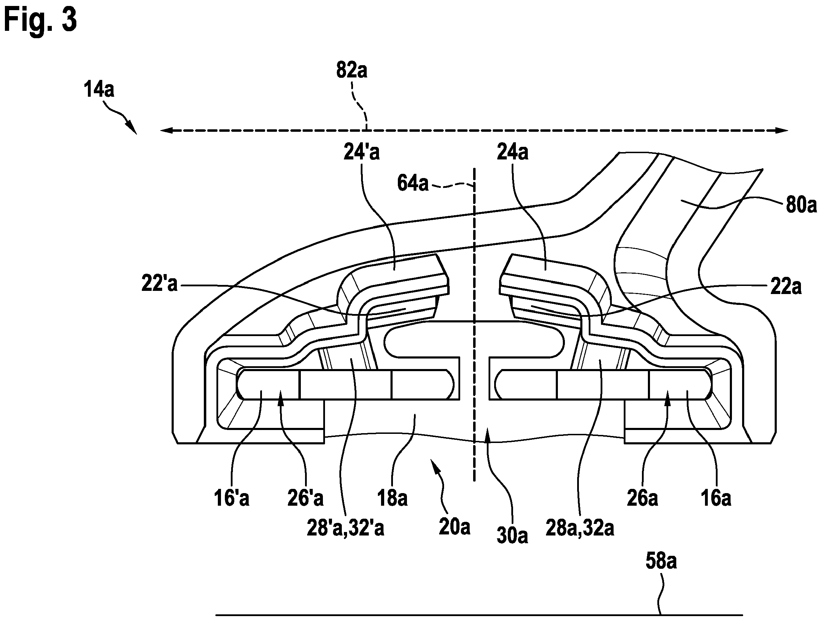

Das Endkappenelement 14a weist ein Wischblattfixierelement 22a auf (vgl. Fig. 2). Das Wischblatt 18a weist ein Formschlusselement 56a auf. Das Formschlusselement 56a des Wischblatts 18a ist dazu vorgesehen, einen Formschluss mit dem Wischblattfixierelement 22a einzugehen. Das weitere Endkappenelement 14'a ist ohne Wischblattfixierelement 22a ausgebildet. Das weitere Endkappenelement 14'a ist dazu vorgesehen die Wischleiste 20a zu fixieren, wobei die Fixierung eine (eingeschränkte) Bewegung des Wischblatts 18a in Längsrichtung des Wischblatts 18a zulässt. Das weitere Endkappenelement 14'a kann als eine Art Loslager bezeichnet werden. Zu einer Montage ist das Wischblattfixierelement 22a beweglich ausgeführt (vgl. Fig. 3). Das Endkappenelement 14a ist zu einer Aufnahme von einem der Endbereiche 60a der Federschiene 16a eingerichtet. Das Endkappenelement 14a weist eine Einführöffnung 66a auf (vgl. Fig. 2). Die Einführöffnung 66a ist zu einer Einführung der Wischleiste 20a vorgesehen. Die Einführöffnung 66a ist zu einer Einführung der Wischleiste 20a entlang einer Montagerichtung 68a vorgesehen. Die Montagerichtung 68a steht senkrecht auf eine Öffnungsebene der Einführöffnung 66a.

Die Figur 2 zeigt eine schematische perspektivische Darstellung des Endkappenelements 14a der Wischervorrichtung 10a. Das Endkappenelement 14a weist einen Wischblattaufnahmebereich 30a auf (vgl. auch Fig. 3). Der Wischblattaufnahmebereich 30a ist dazu vorgesehen, das Wischblatt 18a aufzunehmen. Das Endkappenelement 14a weist ein Trägerelement 24a auf. Das Trägerelement 24a ist einstückig mit dem Endkappenelement 14a ausgebildet. Das Trägerelement 24a ist elastisch ausgebildet. Das Trägerelement 24a ist elastisch auslenkbar ausgebildet. Das Trägerelement 24a ist auf einer fahrzeugscheibenabgewandten Seite des Federschienenaufnahmebereichs 26a angeordnet. Das Endkappenelement 14a weist das Wischblattfixierelement 22a auf. Das Wischblattfixierelement 22a ist an dem Trägerelement 24a angeordnet. Das Trägerelement 24a trägt das Wischblattfixierelement 22a. Das Wischblattfixierelement 22a ist als ein Rastvorsprung ausgebildet. Das Wischblattfixierelement 22a ist quaderförmig ausgebildet. Es ist denkbar, dass das Wischblattfixierelement 22a hakenförmig ausgebildet ist. Es ist denkbar, dass das Wischblattfixierelement 22a andere vergleichbare Formen aufweist. Es ist auch denkbar, dass das Wischblattfixierelement 22a als eine Ausnehmung ausgebildet ist, wenn das korrespondierende Formschlusselement 56a des Wischblatts 18a eine erhabene Form aufweist. Das Wischblattfixierelement 22a ist einstückig mit dem Endkappenelement 14a ausgebildet. Das Wischblattfixierelement 22a ist dazu vorgesehen, eine formschlüssige Verbindung mit dem Formschlusselement 56a einzugehen. Das Wischblattfixierelement 22a ist dazu vorgesehen, das Wischblatt 18a in dem Wischblattaufnahmebereich 30a zu fixieren. Das Trägerelement 24a ist zu der Montage der Wischleiste 20a mit dem Endkappenelement 14a elastisch auslenkbar ausgebildet (vgl. auch Fig. 3). Die Bewegungsrichtung des elastisch auslenkbaren Trägerelements 24a verläuft um eine Biegeachse 62a, welche in einer Haupterstreckungsebene und zumindest im Wesentlichen parallel zu der Montagerichtung 68a des Endkappenelements 14a angeordnet ist (vgl. auch Fig. 3).

Das Endkappenelement 14a weist ein Einfuhrschrägeelement 28a auf. Das Trägerelement 24a trägt das Einfuhrschrägeelement 28a. Das Einfuhrschrägeelement 28a ist in einer parallel zu einer Haupterstreckungsebene des Endkappenelements 14a verlaufenden Ebene neben dem Wischblattaufnahmebereich 30a angeordnet. Der Wischblattaufnahmebereich 30a ist zwischen den Einfuhrschrägeelementen 28a, 28'a angeordnet. Das Einfuhrschrägeelement 28a ist in der Haupterstreckungsebene des Endkappenelements 14a, neben dem Wischblattfixierelement 22a angeordnet. Die Wischblattfixierelemente 22a, 22'a sind zwischen den Einfuhrschrägeelementen 28a, 28'a angeordnet. Das Einfuhrschrägeelement 28a ist dazu vorgesehen, die Montage der Federschiene 16a zu vereinfachen. Das Einfuhrschrägeelement 28a ist dazu vorgesehen, die Montage der Federschiene 16a zu ermöglichen. Das Formschlusselement 32a ist am Trägerelement 24a angeordnet. Das Formschlusselement 32a ist dazu vorgesehen, einen Formschluss mit der Federschiene 16a einzugehen. Das Formschlusselement 32a ist dazu vorgesehen, die Federschiene 16a formschlüssig zu fixieren. Das Formschlusselement 32a und das Einfuhrschrägeelement 28a sind als ein Bauteil ausgebildet. Das Einfuhrschrägeelement 28a bildet das Formschlusselement 32a aus. Das Endkappenelement 14a weist einen Federschienenaufnahmebereich 26a auf.

Die Figur 3 zeigt eine Schnittdarstellung des Endkappenelements 14a während der Montage. Die Schnittdarstellung zeigt eine Ebene, die senkrecht zu der Montagerichtung 68a angeordnet ist. Die Trägerelemente 24a, 24'a sind in ausgelenktem Zustand dargestellt. Das Endkappenelement 14a bildet den Federschienenaufnahmebereich 26a aus. Der Federschienenaufnahmebereich 26a ist dazu vorgesehen, die Federschiene 16a aufzunehmen. Das Formschlusselement 32a ist in einem montierten Zustand an einem fahrzeugscheibenabgewandten Rand des Federschienenaufnahmebereichs 26a angeordnet. Das Einfuhrschrägeelement 28a ist in einem montierten Zustand an einem fahrzeugscheibenabgewandten Rand des Federschienenaufnahmebereichs 26a angeordnet. Das Endkappenelement 14a weist ein weiteres Trägerelement 24'a auf. An dem weiteren Trägerelement 24'a ist ein weiteres Einfuhrschrägeelement 28'a angeordnet. An dem weiteren Trägerelement 24'a ist ein weiteres Formschlusselement 32'a angeordnet. Das Endkappenelement 14a weist eine Spiegelebene 64a auf. Die Spiegelebene 64a ist parallel zu der Montagerichtung 68a angeordnet. Die Spiegelebene 64a ist senkrecht zur Haupterstreckungsebene des Endkappenelements 14a angeordnet. Die Spiegelebene 64a ist in einer Mitte einer senkrecht zur Montagerichtung 68a und senkrecht zur Haupterstreckungsrichtung des Endkappenelements 14a verlaufenden Quererstreckungsrichtung 82a angeordnet.

Die Wischervorrichtung 10a umfasst eine weitere Federschiene 16'a. Die Funktion der weiteren Federschiene 16'a ist identisch mit der Funktion der Federschiene 16a. Die weitere Federschiene 16'a ist an der Spiegelebene 64a zur Federschiene 16a gespiegelt angeordnet. Das Endkappenelement 14a umfasst ein weiteres Trägerelement 24'a. Die Funktion des weiteren Trägerelements 24'a ist identisch mit der Funktion des Trägerelements 24a. Das weitere Trägerelement 24'a ist an der Spiegelebene 64a zum Trägerelement 24a gespiegelt angeordnet. Das Endkappenelement 14a umfasst einen weiteren Federschienenaufnahmebereich 26'a. Die Funktion des weiteren Federschienenaufnahmebereichs 26'a ist identisch mit der Funktion des Federschienenaufnahmebereichs 26a. Der weitere Federschienenaufnahmebereich 26'a ist an der Spiegelebene 64a zum Federschienenaufnahmebereich 26a gespiegelt angeordnet. Das Endkappenelement 14a umfasst ein weiteres Einfuhrschrägeelement 28'a, welches an dem von dem Trägerelement 24a verschiedenen weiteren Trägerelement 24'a des Endkappenelements 14a angeordnet ist. Die Funktion des weiteren Einfuhrschrägeelements 28'a ist identisch mit der Funktion des Einfuhrschrägeelements 28a. Das weitere Einfuhrschrägeelement 28'a ist an der Spiegelebene 64a zum Einfuhrschrägeelement 28a gespiegelt angeordnet. Das Endkappenelement 14a umfasst ein weiteres Formschlusselement 32'a, welches an dem von dem Trägerelement 24a verschiedenen weiteren Trägerelement 24'a des Endkappenelements 14a angeordnet ist. Die Funktion des weiteren Formschlusselements 32'a ist identisch mit der Funktion des Formschlusselements 32a. Das weitere Formschlusselement 32'a ist an der Spiegelebene 64a zum Formschlusselement 32a gespiegelt angeordnet. Das Endkappenelement 14a umfasst ein weiteres Wischblattfixierelement 22'a, welches an dem von dem Trägerelement 24a verschiedenen weiteren Trägerelement 24'a des Endkappenelements 14a angeordnet ist. Die Funktion des weiteren Wischblattfixierelements 22'a ist identisch mit der Funktion des Wischblattfixierelements 22a. Das weitere Wischblattfixierelement 22'a ist an der Spiegelebene 64a zum Wischblattfixierelement 22a gespiegelt angeordnet. Das Endkappenelement 14a haust das Trägerelement 24a ein. Die Umhausung durch das Endkappenelement 14a weist einen Spoileranschluss 80a auf. Der Spoileranschluss 80a ist dazu vorgesehen, das Endkappenelement 14a mit dem Spoiler 44a zu verbinden.

Der Wischblattaufnahmebereich 30a ist in Montagerichtung 68a gesehen seitlich und hinten begrenzt. Der Wischblattaufnahmebereich 30a ist oben begrenzt, wobei "oben" auf der fahrzeugscheibenabgewandten Seite des Wischblattaufnahmebereichs 30a bedeutet. Das Endkappenelement 14a weist das Einführöffnung 66a auf. Die Einführöffnung 66a ist dazu vorgesehen, die Wischleiste 20a in das Endkappenelement 14a aufzunehmen. Das Endkappenelement 14a weist eine Öffnung auf, welche in Haupterstreckungsrichtung des Endkappenelements 14a auf der fahrzeugscheibenzugewandten Seite des Federschienenaufnahmebereichs 26a angeordnet ist. Der Federschienenaufnahmebereich 26a wird in Haupterstreckungsrichtung des Endkappenelements 14a gesehen auf der fahrzeugscheibenzugewandten Seite des Federschienenaufnahmebereichs 26a begrenzt. Der Federschienenaufnahmebereich 26a wird in Haupterstreckungsrichtung des Endkappenelements 14a gesehen auf der fahrzeugscheibenangewandten Seite des Federschienenaufnahmebereichs 26a teilweise begrenzt. Der Federschienenaufnahmebereich 26a wird in Haupterstreckungsrichtung des Endkappenelements 14a gesehen auf der zu dem Wischblattaufnahmebereich 30 abgewandten Seite des Federschienenaufnahmebereichs 26a begrenzt. Die den Federschienenaufnahmebereich 26a begrenzenden Teile des Endkappenelements 14a weisen Einfuhrschrägen in Montagerichtung 68a auf. Die Trägerelemente 24a, 24'a befinden sich in Figur 2 in einem Ruhezustand.

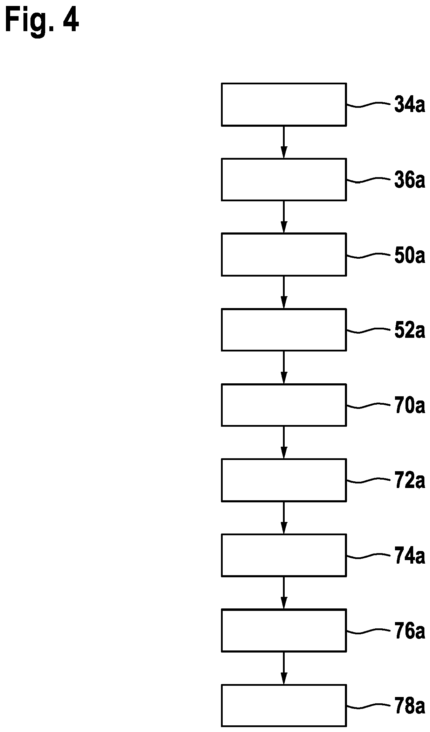

Figur 4 zeigt ein schematisches Ablaufdiagramm eines Verfahrens zu einer Montage der Wischervorrichtung 10a.

In zumindest einem Verfahrensschritt 34a werden die zwei Federschienen 16a, 16'a und das Wischblatt 18a bereitgestellt. In zumindest einem weiteren Verfahrensschritt 36a wird das Wischblatt 18a zwischen die zwei Federschienen 16a, 16'a geklemmt. Das Wischblatt 18a wird formschlüssig zwischen den Federschienen 16a, 16'a fixiert. Es ist denkbar, dass die Federschienen 16a, 16'a und das Wischblatt 18a stoffschlüssig miteinander verbunden werden. Es ist denkbar, dass das Wischblatt 18a an die Federschienen 16a, 16'a anvulkanisiert wird. Die mit dem Wischblatt 18a vormontierten Federschienen 16a, 16'a bilden die Wischleiste 20a. In zumindest einem weiteren Verfahrensschritt 50a wird die Endkappeneinheit 12a bereitgestellt.

In zumindest einem weiteren Verfahrensschritt 52a wird die vormontierte Wischleiste 20a durch die Einführöffnung 66a in das Endkappenelement 14a eingeschoben. Bei dem Einschieben der vormontierten Wischleiste 20a wird eine Kraft auf das Einfuhrschrägeelement 28a, 28'a ausgeübt. Durch die Kraft wird das Einfuhrschrägeelement 28a, 28'a aus seiner Ruhelage heraus bewegt. Durch die Bewegung des Einfuhrschrägeelements 28a, 28'a wird das Trägerelement 24a, 24'a ausgelenkt. In einer alternativen Ausführungsform wird das Trägerelement 24b ausgelenkt. In einer alternativen Ausführungsform werden Balkenelemente 38c, 38'c und ein Balkenverbindungselement 40c, welche ein Trägerelement 24c ausbilden, ausgelenkt. Durch das Trägerelement 24a, 24'a, 24b, 24c wird das Formschlusselement 32a, 32'a aus seiner Ruhelage heraus bewegt. Durch das Trägerelement 24a, 24'a, 24b, 24c wird das Wischblattfixierelement 22a, 22'a aus seiner Ruhelage heraus bewegt. Bei dem Erreichen einer montierten Endposition der Wischleiste 20a in dem Endkappenelement 14a wird die Kraft auf das Einfuhrschrägeelement 28a, 28'a zurückgenommen. Das Einfuhrschrägeelement 28a, 28'a wird durch eine Rückstellkraft in seine Ruhelage zurückbewegt. Das Trägerelement 24a, 24'a, 24b, 24c wird in seine Ruhelage zurückbewegt. Das Formschlusselement 32a, 32'a wird in seine Ruhelage zurückbewegt. Das Formschlusselement 32a, 32'a rastet dabei in das korrespondierende Formschlusselement 54a, 54'a auf der Federschiene 16a, 16'a ein. Das Wischblattfixierelement 22a, 22'a wird in seine Ruhelage zurückbewegt. Das Wischblattfixierelement 22a, 22'a rastet dabei in das korrespondierende Formschlusselement 56a, 56'a auf dem Wischblatt 18a ein.

In zumindest einem weiteren Verfahrensschritt 70a wird das weitere Endkappenelement 14'a auf ein weiteres Ende der Wischleiste 20a geschoben. In einem weiteren Verfahrensschritt 72a wird der Spoiler 44a an der Wischleiste 20a montiert. In zumindest einem weiteren Verfahrensschritt 74a wird der Adapter 48a an der Wischleiste 20a und dem Spoiler 44a montiert. In zumindest einem weiteren Verfahrensschritt 76a wird das Befestigungselement 46a an dem Adapter 48a befestigt. In zumindest einem Verfahrensschritt 78a wird die Vorrichtung zu einem Betrieb bereitgestellt.

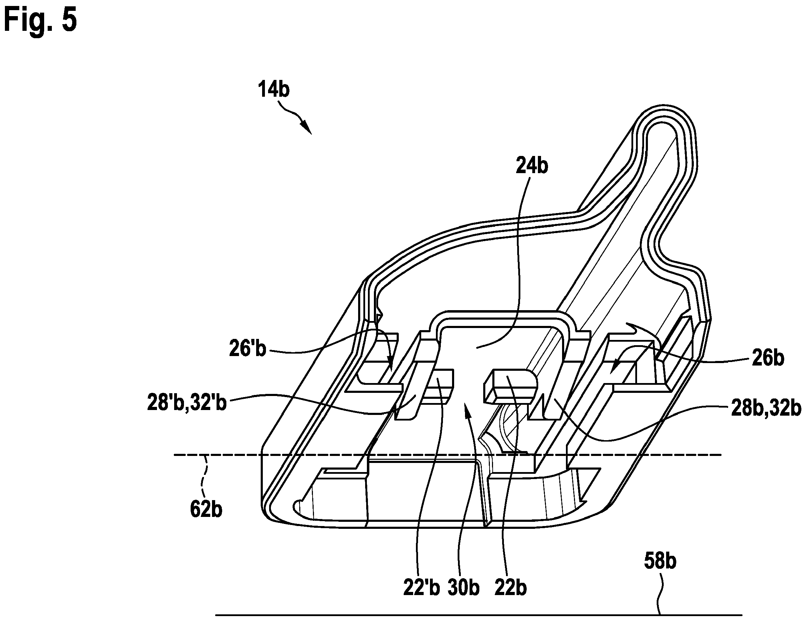

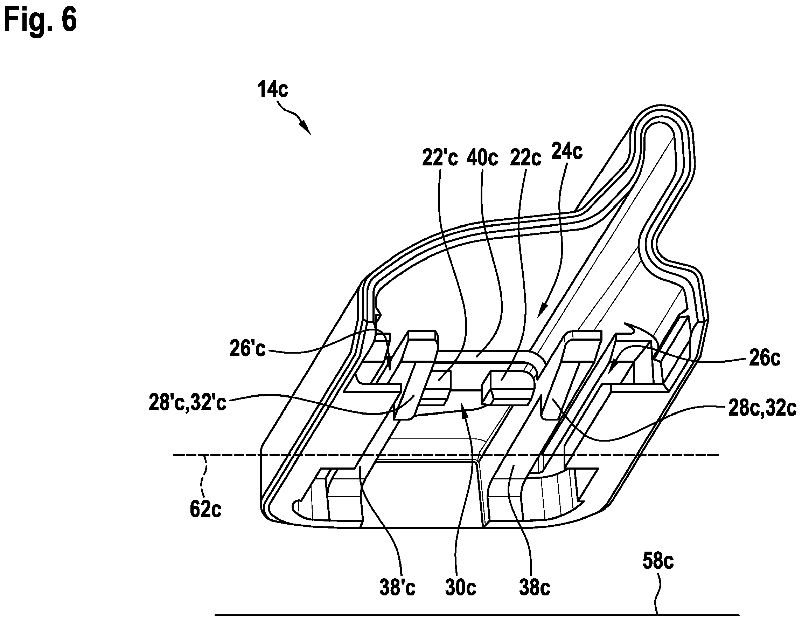

In den Figuren 5 und 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 und 6 ist der Buchstabe a durch die Buchstaben b bzw. c ersetzt.

Die Figur 5 zeigt eine schematische perspektivische Darstellung eines alternativen Endkappenelements 14b einer alternativen Wischervorrichtung 10b. Die Wischervorrichtung 10b weist ein Endkappenelement 14b auf. Das Endkappenelement 14b bildet einen Wischblattaufnahmebereich 30b und einen Federschienenaufnahmebereich 26b zur Aufnahme einer aus Federschiene(n) 16b, 16'b und Wischblatt 18b ausgebildeten Wischleiste 20b aus. Der Wischblattaufnahmebereich 30b und/oder der Federschienenaufnahmebereich 26b weisen eine Einführöffnung 66b auf. Die Einführöffnung 66b ist zu einer Einführung der Wischleiste 20b vorgesehen. Die Einführöffnung 66b ist zu einer Einführung der Wischleiste 20b entlang einer Montagerichtung 68b vorgesehen. Die Montagerichtung 68b steht senkrecht auf eine Öffnungsebene der Einführöffnung 66b. Das Endkappenelement 14b weist ein Trägerelement 24b auf. Das Trägerelement 24b ist plattenförmig ausgebildet. Das Trägerelement 24b ist elastisch auslenkbar. Das Trägerelement 24b ist um eine Biegeachse 62b bewegbar angeordnet. Die Biegeachse 62b verläuft parallel zu einer Haupterstreckungsebene des Endkappenelements 14b und senkrecht zu der Montagerichtung 68b. Das Trägerelement 24b trägt zwei Wischblattfixierelemente 22b, 22'b. Die Wischblattfixierelemente 22b, 22'b sind an einer fahrzeugscheibenzugewandten Seite des Trägerelements 24b angeordnet. Das Trägerelement 24b ist zu der formschlüssigen Montage des Wischblatts 18b elastisch auslenkbar. Das Trägerelement 24b trägt zwei Einfuhrschrägeelemente 28b, 28'b. Die Einfuhrschrägeelemente 28b, 28'b sind an der fahrzeugscheibenabgewandten Seite angeordnet. Das Endkappenelement 14b weist zwei Formschlusselemente 32b, 32'b auf.

Figur 6 zeigt eine schematische perspektivische Darstellung eines weiteren alternativen Endkappenelements 14c einer weiteren alternativen Wischervorrichtung 10c. Die Wischervorrichtung 10c weist ein Endkappenelement 14c auf. Das Endkappenelement 14c bildet einen Wischblattaufnahmebereich 30c und einen Federschienenaufnahmebereich 26c zur Aufnahme einer aus Federschiene(n) 16c, 16'c und Wischblatt 18c ausgebildeten Wischleiste 20c aus. Der Wischblattaufnahmebereich 30c und/oder der Federschienenaufnahmebereich 26c weisen eine Einführöffnung 66c auf. Die Einführöffnung 66c ist zu einer Einführung der Wischleiste 20c vorgesehen. Die Einführöffnung 66c ist zu einer Einführung der Wischleiste 20c entlang einer Montagerichtung 68c vorgesehen. Die Montagerichtung 68c steht senkrecht auf eine Öffnungsebene der Einführöffnung 66c. Das Endkappenelement 14c weist ein Trägerelement 24c auf. Das Trägerelement 24c weist ein Balkenelement 38c auf. Das Trägerelement 24c weist ein weiteres Balkenelement 38'c auf. Die Balkenelemente 38c, 38'c sind über ein Balkenverbindungselement 40c miteinander verbunden. Das Trägerelement 24c ist elastisch auslenkbar. Das Trägerelement 24c ist um eine Biegeachse 62c bewegbar angeordnet. Die Biegeachse 62c verläuft parallel zu einer Haupterstreckungsebene des Endkappenelements 14c und senkrecht zu der Montagerichtung 68c. Das Trägerelement 24c trägt zwei Wischblattfixierelemente 22c, 22'c. Die Wischblattfixierelemente 22c, 22'c sind an einer fahrzeugscheibenzugewandten Seite des Trägerelements 24c angeordnet. Das Trägerelement 24c ist zu der formschlüssigen Montage des Wischblatts 18c elastisch auslenkbar. Das Trägerelement 24c trägt zwei Einfuhrschrägeelemente 28c, 28'c. Die Einfuhrschrägeelemente 28c, 28'c sind an der fahrzeugscheibenabgewandten Seite angeordnet. Das Endkappenelement 14c weist zwei Formschlusselemente 32c, 32'c auf.

## Patentansprüche

1. Wischervorrichtung (10a; 10b; 10c) mit zumindest einer Endkappeneinheit (12a; 12b; 12c), welche zumindest ein Endkappenelement (14a; 14b; 14c) umfasst, das zu einer Aufnahme von zumindest einem Endbereich (60a; 60b; 60c) von zumindest einer Federschiene (16a; 16b; 16c) einer Wischleiste (20a; 20b; 20c) und von zumindest einem Wischblatt (18a; 18b; 18c) der Wischleiste (20a; 20b; 20c) eingerichtet ist und das zumindest ein Wischblattfixierelement (22a; 20b; 20c) zur Fixierung des Wischblatts (18a; 18b; 18c) aufweist, **dadurch gekennzeichnet, dass** das Wischblattfixierelement (22a; 22b; 22c), insbesondere zu einer formschlüssigen Montage des Wischblatts (18a; 18b; 18c), aus einer Ruhelage des Wischblattfixierelements (22a; 22b; 22c) in dem Endkappenelement (14a; 14b; 14c) heraus bewegbar ausgeführt ist.

2. Wischervorrichtung (10a; 10b; 10c) nach Anspruch 1, **dadurch gekennzeichnet, dass** das Endkappenelement (14a; 14b; 14c) zumindest ein Trägerelement (24a; 24b; 24c) aufweist, welches zumindest das Wischblattfixierelement (22a; 22b; 22c) trägt, wobei zumindest das Trägerelement (24a; 24b; 24c), insbesondere zu der formschlüssigen Montage des Wischblatts (18a; 18b; 18c), elastisch auslenkbar ist.

3. Wischervorrichtung (10a; 10b; 10c) nach Anspruch 2, **dadurch gekennzeichnet, dass** das Trägerelement (24a; 24b; 24c) um eine Achse auslenkbar ist, welche zumindest im Wesentlichen parallel zu einer Haupterstreckungsebene des Endkappenelements (14a; 14b; 14c) ist.

4. Wischervorrichtung (10a; 10b; 10c) zumindest nach dem Oberbegriff des Anspruchs 1, **dadurch gekennzeichnet, dass** das Endkappenelement (14a; 14b; 14c) zumindest einen Federschienenaufnahmebereich (26a; 26b; 26c) ausbildet und dass das Endkappenelement (14a; 14b; 14c) zumindest ein Einfuhrschrägeelement (28a; 28b; 28c) aufweist, welches in einem montierten Zustand der Wischervorrichtung (10a; 10b; 10c) an einem scheibenabgewandten Rand des Federschienenaufnahmebereichs (26a; 26b; 26c) angeordnet ist.

5. Wischervorrichtung (10a; 10b; 10c) nach Anspruch 4, **dadurch gekennzeichnet, dass** das Trägerelement (24a; 24b; 24c) das Einfuhrschrägeelement (28a; 28b; 28c) trägt.

6. Wischervorrichtung (10a; 10b; 10c) nach Anspruch 4 oder 5, **dadurch gekennzeichnet, dass** das Endkappenelement (14a; 14b; 14c) einen Wischblattaufnahmebereich (30a; 30b; 30c) ausbildet und dass das Einfuhrschrägeelement (28a; 28b; 28c) in einer Haupterstreckungsebene des Endkappenelements (14a; 14b; 14c) gesehen zumindest teilweise neben dem Wischblattaufnahmebereich (30a; 30b; 30c) angeordnet ist.

7. Wischervorrichtung (10a; 10b; 10c) einem der vorhergehenden Ansprüche, **dadurch gekennzeichnet, dass** das Endkappenelement (14a; 14b; 14c) ein Formschlusselement (32a; 32b; 32c) aufweist, welches dazu vorgesehen ist, einen Formschluss mit der Federschiene (16a; 16b; 16c) einzugehen.

8. Wischervorrichtung (10a; 10b; 10c) nach Anspruch 7, **dadurch gekennzeichnet, dass** das Endkappenelement (14a; 14b; 14c) zumindest ein Trägerelement (24a; 24b; 24c) aufweist, welches das Formschlusselement (32a; 32b; 32c) trägt, wobei zumindest das Trägerelement (24a; 24b; 24c), insbesondere zu der formschlüssigen Montage der Federschiene (16a; 16b; 16c), elastisch auslenkbar ist.

9. Wischervorrichtung (10a; 10b; 10c) zumindest nach den Ansprüchen 4 und 7, **dadurch gekennzeichnet, dass** das Einfuhrschrägeelement (28a; 28b; 28c) das Formschlusselement (32a; 32b; 32c) ausbildet.

10. Wischervorrichtung (10a; 10b; 10c) zumindest nach Anspruch 2, **dadurch gekennzeichnet, dass** das Endkappenelement (14a; 14b; 14c) zumindest ein weiteres Wischblattfixierelement (22'a; 22'b; 22'c) umfasst, welches an dem Trägerelement (24b; 24c) oder an einem von dem Trägerelement (24a) verschiedenen, insbesondere von dem Trägerelement (24a) getrennt ausgebildeten,weiteren Trägerelement (24'a) des Endkappenelements (14a) angeordnet ist.

11. Wischer (42a; 42b; 42c) mit einer Wischervorrichtung (10a; 10b; 10c) nach einem der vorhergehenden Ansprüche und mit der Wischleiste (20a; 20b; 20c).

12. Verfahren zur Montage einer Wischervorrichtung (10a; 10b; 10c), insbesondere nach einem der Ansprüche 1 bis 10, mit zumindest einer Endkappeneinheit (12a; 12b; 12c), welche zumindest ein Endkappenelement (14a; 14b; 14c) umfasst, das zu einer Aufnahme von Endbereichen (60a; 60b; 60c) von zumindest einer Federschiene (16a; 16b; 16c) einer Wischleiste (20a; 20b; 20c) und von zumindest einem Wischblatt (18a; 18b; 18c) der Wischleiste (20a; 20b; 20c) eingerichtet ist, und das zumindest ein Wischblattfixierelement (22a; 22b; 22c) zur Fixierung des Wischblatts (18a; 18b; 18c) aufweist, **dadurch gekennzeichnet, dass** das Wischblattfixierelement (22a; 22b; 22c) in zumindest einem Montageschritt (34a; 34b; 34c) aus einer Ruhelage des Wischblattfixierelements (22a; 22b; 22c) in dem Endkappenelement (14a; 14b; 14c) heraus bewegt wird.
